# EUROPEAN PATENT APPLICATION

(11) **EP 1 614 337 A1**
(43) Date of publication of application: **11.01.2006**
(21) Application number: 05468004.6
(22) Date of filing: 24.02.2005
(51) Int. Cl.: A01D 34/416

(54) **Head with a string and blades of a rotary motor scythe or lawn mower**

(30) Priority: 07.07.2004 SI 200400204
(71) Applicant: Zupancic, Alojz, 1210 Ljubljana (SI)
(72) Inventor: Zupancic, Alojz, 1210 Ljubljana (SI)
(74) Representative: Primozic, Alenka

(57) **Abstract**

A head with a string and blades of a rotary motor scythe or mower consists of a basic disc **(1)** intended to be positioned on an axle of an optional scythe or mower, then of a fastening disc **(3)** concentrically positioned on the basic disc **(1),** preferably with an anticlockwise thread link **(4)** and strings **(5),** whereby the basic disc **(1)** and the fastening disc **(2)** form a radially running gap **(7)** on their contact surface, in said gap there are pins **(8)** positioned in the basic disc **(1)** and the fastening disc **(2),** said pins **(8)** being of a cylindrical shape and having an indentation **(10)** in the area of the external circumference **(9)** of discs **(1b)** and **(2),** whereby the pins **(8)** are arranged on the disc **(1)** or **(2)** on an apparently concentric circle, preferably pairwise. The strings **(5)** are provided with binding elements **(11)** to be linked to the pins **(8)** in an oscillating manner, whereby each binding element **(11)** is conceived in a way that at one free end of the string **(5)** there is a tubular element **(12)** in the shape of a horse-shoe, the radius of the radially shaped clearance **(13)** exceeds that of a gap **(14)** formed by the ends of the element **(12)** and at the same time the diameter of the clearance **(13)** of the element **(12)** is of the shape to fit the shape of the pin **(8)** and the diminished diameter of the pin **(8)** in the area of the indentation **(10)** corresponds to the width of the gap **(14)** of the binding element **(11).** On the pins **(8)** there may also be blades **(6)** positioned in a rotating manner.

## Description

### Subject of the Invention

The subject of the invention is a head with a string and blades of a rotary motor scythe or lawn mower.

### Technical Problem

The technical problem solved by the invention is how to conceive a head of a rotary motor scythe or lawn mower, the strings of which would have a considerably longer life span than the existing strings, whereby the concept of a new string and its seat on the head of a scythe or lawn mower would allow the string to be replaced without any major intervention on the head and would be replaced more quickly and simply and the operator would not need any special expert knowledge or manual skills to do it and the head of the invention will also be useful in trimming - cutting thicker stems of bushes for instance.

### Prior Art

Known strings of this type are conceived as flexible bar elements that are fixed at one end or in their centre to the head of a scythe or lawn mower. In the first case the longer section of the string sticks out, and in the second both free ends stick out. Due to the rotation of the head (ca. 7000 - 9000 revolutions/minute) and hitting of the string against plants to be cut and even against the surface, e.g. stones or soil unevenness, the string constantly swings in the head at the position where the string exits the head.

It has proved in practice that such repeated (with respect to the number of revolutions and hits against a plant or surface) elastic deformation of a string at the exit from the head wears the material, which results in the string to break at the exit from the head.

The described elastic deformation of the string at the exit from the head still increases when the string hits against thicker stems of bushes for instance, which stems cannot be cut at all and the string only avoids the obstacle with each revolution. Since the operator tries to cut also thicker stems by holding the head in the vicinity of thicker stems, the number of elastic deformations substantially increases thus shortening the life span of the string. The quality of mowing is also poorer, because the operator has to cut thicker stems by other means.

Due to the mentioned reasons a string breaks after some 10 minutes of mowing and remains in the grass, it could be understood as nature polluting. If animals swallow a broken string together with grass, they face digestion problems. There are also known death cases of cows due to internal bleeding in the alimentary tract caused by a swallowed string.

Besides, changing of a string prolongs the time of mowing. There also exist heads with a spool of string in the interior, which is taken out to a working length during operation. Yet all the remaining above-mentioned disadvantages of the head are thus not done away with.

There is a need for such head for mowers with a string that will not be subject to breaking due to the wear of material and will also be capable of cutting thicker stems.

### Solution to the Technical Problem

The described technical problem is solved by a head with a string and blades of a motor scythe or mower of the invention, the basic characteristic of which is in that it consists of two axially connected discs, of which one is positioned on the shaft of the scythe or mower, whereby there is a gap between both discs in the area of the edge and within the gap there are specially shaped pins, on which strings are attached with its linking elements so that they are partly oscillating on the pins and also manually removable without a need to disassemble the disc, and also blades are attached that are removable only by separating both discs due to safety reasons. A combination of strings and blades allows mowing of thin stems of grass for instance and also of thicker stems, of e.g. stems of bushes. The length of strings is preferably longer than the length of blades, so that the strings with their sections sticking over the blades cut the stems of grass and when they come across harder objects, said strings bend and when the scythe or mower is brought closer to the object, the blades are used without the string getting considerably damaged.

The described manual mode of positioning of strings and blades into a head of a motor scythe or mower offers the operator a possibility to adjust the head to the current composition of plants to be cut. If only grass it to be cut, strings are sufficient. If we expect to have thicker stems in the grass, we alternately arrange strings and blades on the circumference of the head. If bushes or woody reeds need to be cut, we can use only blades and remove the strings thus extending the life span of the latter.

A typical concept of a binding element on strings and an adequate shape of pins between both discs on the head allow quick and simple positioning and removal of strings without any tool or special manual skills. The strings can safely be replaced also during mowing when the strings of the blade freely twist in the seat in the head for approximately 180° without getting elastically or plastically deformed. The centrifugal force of the rotating head holds each string and blade in radially oriented position. Said mode of fixing of a string allows the string to rotate with respect to the current force of hit of a string against a plant or other object, thus avoiding the obstacle as dictated by said forces.

Test have shown that a string of the invention manufactured of the same material as known strings suffices for at least 4 hours of mowing, when its dimension becomes inefficient for mowing. The use of special strings of a higher quality additionally increases their life span.

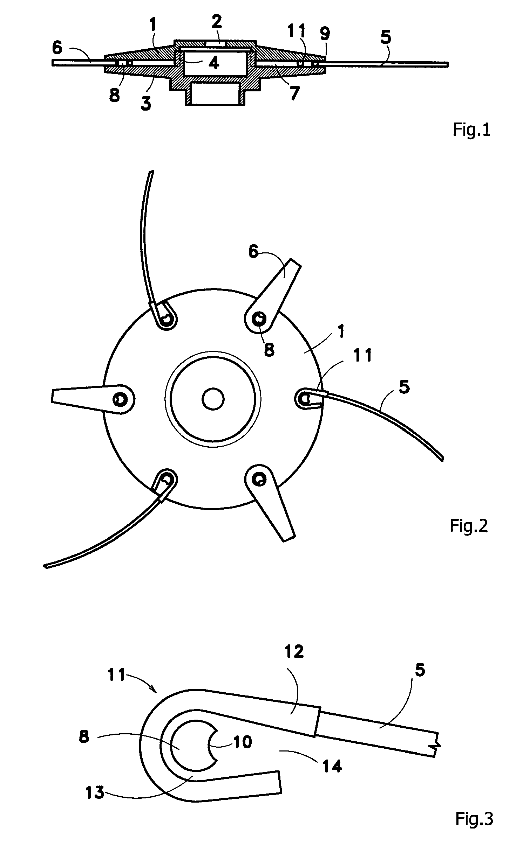

The essence of the invention will now be described in more detail by a description of embodiments and the enclosed drawing, in which
- Fig. 1: shows a head of a motor scythe or mower in cross-section with strings and blades,
- Fig. 2: shows a head of a motor scythe or mower with strings and blades of the invention in ground plan,
- Fig. 3: shows a string on a pin in increased scale.

A head with a string and blades of a rotary motor scythe or mower consists of a basic disc **1** intended to be positioned on an axle of an optional scythe or mower, whereby its central part **2** is adapted to each type of a scythe or mower, then of a fastening disc **3** concentrically positioned on the basic disc **1,** preferably with an anticlockwise thread link **4,** strings **5** and blades **6.**

The contact surface of the basic disc **1** and the fastening disc **2** form a radially running gap **7,** in which pins **8** are positioned as holders of strings **5** and blades **6** in the basic disc **1** or fastening disc **2.** The pins **8** are of a cylindrical shape and have an indentation **10** in the area of the external circumference **9** of discs **1** and **2.** The indentation **10** is preferably conceived as a coaxially running groove or as a radially running blind drilled hole.

The pins **8** are arranged on the disc **1** or **2** on an apparently concentric circle pairwise, which allows an alternate positioning of strings **5** and blades **6** or only strings **5** or blades **6** with respect to the type of plants intended to be cut, whereby it is ascertained that the mass of the entire head with strings **5** and blades **6** is axially symmetrically equally distributed, which is important due to high speed of head rotation during mowing.

Any known prefabricated strings of various profiles and materials can be used for strings **5.** The string **5** of the invention has a characteristic binding element **11,** which is as follows: at one free end of the string **5** there is a tubular element **12** in the shape of a horse-shoe, the radius of the radially shaped clearance **13** exceeds that of a gap **14** formed by the ends of the element **12** and at the same time the diameter of the clearance **13** of the element **12** is of the shape to fit the shape of the pin **8.**

Diminished diameter of the pin **8** in the area of the indentation **10** allows us to remove the string **5** by twisting it in a position where its gap **14** fits the smaller diameter of the pin **8** in the area of the indentation **10,** whereby the string can be taken off the pin **8.** The string **5** occupies this position with respect to the indentation **10** on the pin **8** only when the string **5** is oriented tangentially to the circumference **9** of discs **1** and **3** in direction of head rotation. The strings **5** cannot be in such position during operation, that's why they cannot automatically unhook from the pins **8** thus injuring anyone in the vicinity due to the centrifugal force.

The blades **6** have drilled holes **13** in the vicinity of one end, with said holes being positioned on the pins **8.** The blades **6** can only be removed by previously unscrewing the fastening disc from the basic disc **1.**

According to a special embodiment the blades **6** are equipped with binding elements which are substantially equal to the binding elements **11** with strings **5,** yet only when tests would prove the safety of such embodiment.

It is understandable that on the basis of the described invention a man skilled in the art can conceive other embodiments, without circumventing the essence of the invention described in the appended claims.

## Claims

1. A head with a string and blades of a rotary motor scythe or mower consisting of a basic disc **(1)** intended to be positioned on an axle of an optional scythe or mower, whereby its central part **(2)** is adapted to each type of a scythe or mower, then of a fastening disc **(3)** concentrically positioned on the basic disc **(1),** preferably with an anticlockwise thread link **(4)** and strings **(5),** whereby the basic disc **(1)** and the fastening disc **(2)** form a radially running gap **(7)** on their contact surface, in said gap there are pins **(8)** positioned in the basic disc **(1)** and the fastening disc **(2), characterised in that** the pins **(8)** are of a cylindrical shape and have an indentation **(10)** in the area of the external circumference **(9)** of discs **(1)** and **(2)** and that the pins **(8)** are arranged on the disc **(1)** or **(2)** on an apparently concentric circle, preferably pairwise, and that the strings **(5)** are provided with binding elements **(11)** to be linked to the pins **(8)** in an oscillating manner, whereby each binding element **(11)** is conceived in a way that at one free end of the string **(5)** there is a tubular element **(12)** in the shape of a horse-shoe, the radius of the radially shaped clearance **(13)** exceeds that of a gap **(14)** formed by the ends of the element **(12)** and at the same time the diameter of the clearance **(13)** of the element **(12)** is of the shape to fit the shape of the pin **(8)** and the diminished diameter of the pin **(8)** in the area of the indentation **(10)** corresponds to the width of the gap **(14)** of the binding element **(11).**

2. A head according to claim 1, **characterised in that** on the pins **(8)** there may also be blades (6), preferably alternating with strings **(5).**

3. A head according to claims 1 and 2, **characterised in that** the blades **(6)** are conceived in a way to have drilled holes **(13)** in the vicinity of one end, with which they are positioned on pins **(8).**

4. A head according to claim 3, **characterised in that** the blades **(6)** can be provided with binding elements that are substantially similar to the binding elements **(11)** with strings **(5).**

5. A head according to claim 1, **characterised in that** the indentation **(10)** in the pins **(8)** is preferably conceived as a coaxially running groove or as a radially running blind drilled hole.
